(19) Europäisches Patentamt
European Patent Office
Office européen des brevets

(11) **EP 4 644 503 A1**

(12) **EUROPEAN PATENT APPLICATION**
published in accordance with Art. 153(4) EPC

(43) Date of publication:
**05.11.2025   Bulletin 2025/45**

(21) Application number: **23911928.2**

(22) Date of filing: **21.12.2023**

(51) International Patent Classification (IPC):
**C09J 7/35** (2018.01)    **C09J 163/00** (2006.01)
**C09J 171/10** (2006.01)

(52) Cooperative Patent Classification (CPC):
**C09J 7/35; C09J 163/00; C09J 171/10**

(86) International application number:
**PCT/JP2023/045902**

(87) International publication number:
**WO 2024/143148 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **26.12.2022   JP 2022208661**

(71) Applicant: **Resonac Corporation
Tokyo 105-7325 (JP)**

(72) Inventors:
• **TAKAHASHI, Nobuyuki
  Tokyo 105-7325 (JP)**
• **TAKAHASHI, Kentaro
  Tokyo 105-7325 (JP)**
• **NIIBAYASHI, Ryota
  Tokyo 105-7325 (JP)**

(74) Representative: **Strehl & Partner mbB
Maximilianstrasse 54
80538 München (DE)**

(54)   **METHOD FOR PRODUCING FILM-LIKE BONDING MATERIAL**

(57)   To provide a film-shaped bonding material which realizes bonding having a short bonding process time, a long open time and excellent adhesiveness. A method for producing a film-shaped bonding material, including a step of applying a resin composition containing an amorphous thermoplastic resin and a solvent onto a support, and a step of removing the solvent from the resin composition after the application to obtain a film-shaped bonding material laminated on the support, in which the amorphous thermoplastic resin is at least one of a thermoplastic epoxy resin and a phenoxy resin, has an epoxy equivalent of 1,600 g/eq. or more or does not contain an epoxy group, and has a heat of fusion of 15 J/g or less.

[Fig. 1]

**EP 4 644 503 A1**

**Description**

Technical Field

The present invention relates to a method for producing a film-shaped bonding material which is suitable for applications in which dissimilar materials are easily and firmly bonded.

Background Art

In recent years, from the viewpoint of weight reduction and high performance, multi-materialization of components has been advanced in various fields such as automobile components, medical devices, and home electric appliances. Multi-materialization is a method for reducing the weight and increasing the strength of materials by using materials with different functions and materials (hereinafter, referred to as dissimilar materials) in combination. In order to realize multi-materialization, a technique for firmly bonding dissimilar materials is indispensable.

As a means for firmly bonding the dissimilar materials to each other, a thermosetting epoxy resin-based adhesive (PTL 1 and the like) which is a liquid type adhesive is widely used.

Bonding using a liquid type adhesive requires an application step of applying a liquid resin composition and a curing step of polymerizing and curing the resin composition after the application.

Therefore, when the bonding is performed using the liquid type adhesive, there is a problem that it takes a long time to coat the resin composition in the application step, and it takes a long time for the polymerization reaction in the curing step (that is, the bonding process time is long), resulting in a lack of convenience.

In the description herein, the bonding process time means a time from a start point to an end point with a time at which at least one kind of base material constituting the bonded body and a bonding material are in contact as the start point and a time at which the production of the bonded body is completed as the end point. For example, the bonding process time includes a time required for a step of applying a liquid adhesive to the base material, a time required for a drying step, a time required for a step of placing a film, and a time required for bonding the base materials to each other (for example, curing an adhesive layer).

A technique has also been disclosed in which an epoxy resin composition is impregnated into or coated on a base material, then semi-cured (B-staged), and used as a B-stage-shaped laminated body with an adhesive layer for producing a bonded body (PTL 2 and the like).

However, bonding using a B-stage-shaped adhesive also requires a curing step of curing the adhesive layer in a semi-cured state by a polymerization reaction, and there is a problem that the bonding process time is long.

In addition, the B-stage-shaped adhesive has poor storage stability, cannot be stored for a long period of time at ordinary temperature, needs to be stored at a low temperature, and has a problem that the open time is short and lacks convenience.

In the description herein, the open time means a limited time from the application or placement of a bonding material on a base material A to the completion of the placement of a base material B. When the open time is within the above range, the adhesive force of the bonding material does not decrease, and the base material A and the base material B can be bonded to each other with sufficient adhesive force. As the open time is longer, the limited time from the application or placement of the bonding material on the base material A to the completion of the placement of the base material B is longer, and the convenience is higher.

As a means for bonding dissimilar materials, a thermoplastic adhesive composition (hereinafter, referred to as a hot-melt adhesive) is also used (PTL 3 and the like). By using the hot-melt adhesive, specifically, since the hot-melt adhesive performs adhesion by utilizing a phase change that does not involve a polymerization reaction, an application step is unnecessary, the curing time is short (that is, the bonding process time is short), and the convenience is excellent. In addition, long-term storage at ordinary temperature is also possible, and convenience is excellent in that an open time is long.

However, since the conventional hot-melt adhesive is composed of a crystalline resin or a resin containing a crystalline resin in order to lower the melt viscosity, the cohesive force in the adhesive resin is high, and the hot-melt adhesive cannot have a sufficient interaction with the base material. In addition, during melting and adhesion, the viscosity becomes low at high temperatures, and it is easy to flow out from the adhesion surface, and the film thickness is not stable because it is difficult to control the viscosity. Due to these factors, there is a problem that a high adhesive force cannot be stably obtained with a conventional hot-melt adhesive.

Citation List

Patent Literature

PTL 1:JP 2019-157018 A
PTL 2:JP 10-17685 A
PTL 3:JP 10-168417 A

Summary of Invention

Technical Problem

As described above, among the conventional techniques, the thermosetting epoxy resin-based adhesive having excellent adhesiveness has at least one problem of a long bonding process time and a short open time in both liquid and B-stage forms, and there has been a problem that a hot-melt adhesive having a short bonding process time and a long open time cannot stably obtain high adhesive force.

The present invention has been made in view of such a technical background, and an object of the present invention is to provide a method for producing a film-shaped bonding material suitable for use in easily and firmly bonding dissimilar materials, which is a bonding technique having a short bonding process time, a long open time, and excellent adhesiveness.

Solution to Problem

In order to achieve the above object, the present invention provides the following means.

In the description herein, bonding means coupling materials together, and adhesion and welding are narrower concepts thereof. Adhesion means that two adherends (to be adhered) are brought into a bonded state via an organic material (thermosetting resin, thermoplastic resin, or the like) such as a tape or an adhesive, and welding means that the surface of a thermoplastic resin or the like is melted by heat and brought into a bonded state by entanglement and crystallization due to molecular diffusion by contact pressurization and cooling.

<Method for Producing Film-Shaped Bonding Material>

[1] A method for producing a film-shaped bonding material, including a step of applying a resin composition containing an amorphous thermoplastic resin and a solvent onto a support, and a step of removing the solvent from the resin composition after the application to obtain a film-shaped bonding material laminated on the support,
in which the amorphous thermoplastic resin is at least one of a thermoplastic epoxy resin and a phenoxy resin, has an epoxy equivalent of 1,600 g/eq. or more or does not contain an epoxy group, and has a heat of fusion of 15 J/g or less.
[2] The method for producing a film-shaped bonding material according to [1], further including a step of peeling off the film-shaped bonding material from the support on which the film-shaped bonding material is laminated.
[3] The method for producing a film-shaped bonding material according to [1] or [2], in which the support is a belt-shaped release film.
[4] The method for producing a film-shaped bonding material according to any one of [1] to [3], in which the film has a thickness of 10 $\mu$m to 3 mm.

<Bonded Body>

[5] A bonded body obtained by bonding a base material A and a base material B via a film-shaped bonding material produced by the method for producing a film-shaped bonding material according to any one of [1] to [4].

Advantageous Effects of Invention

According to the present invention, it is possible to provide a film-shaped bonding material which realizes bonding having a short bonding process time, a long open time, and excellent adhesiveness.

Brief Description of Drawings

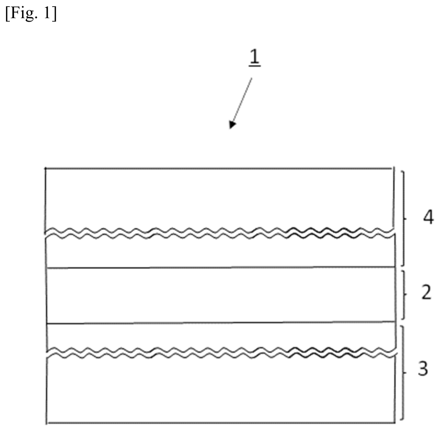

[Fig. 1] Fig. 1 is a configuration diagram of a bonded body using a film-shaped bonding material in one embodiment of the present invention.

Description of Embodiments

[Method for Producing Film-Shaped Bonding Material]

The method for producing a film-shaped bonding material of the present disclosure is a method for producing a film-shaped bonding material, including a step of applying a resin composition containing an amorphous thermoplastic resin and a solvent onto a support, and a step of removing the solvent from the resin composition after the application to obtain a film-shaped bonding material laminated on the support, in which the amorphous thermoplastic resin is at least one of a thermoplastic epoxy resin and a phenoxy resin, has an epoxy equivalent of 1,600 g/eq. or more or does not contain an epoxy group, and has a heat of fusion of 15 J/g or less.

The surface of the support is preferably subjected to a release treatment.

(Film-shaped Bonding Material)

The film-shaped bonding material obtained by the production method of the present disclosure contains an amorphous thermoplastic resin which is at least one selected from a thermoplastic epoxy resin and a phenoxy resin, has an epoxy equivalent of 1,600 g/eq. or more or does not contain an epoxy group, and has a heat of fusion of 15 J/g or less.

In the present disclosure, the amorphous resin means a resin having a melting point (Tm) but having no or very small endothermic peak (melting point) associated with clear melting in measurement using a differential scanning calorimeter (DSC). The heat of fusion is calculated from the area of the endothermic peak of DSC and the weight of the thermoplastic resin component. When an inorganic filler or the like is contained in the film-shaped bonding material, the heat of fusion is calculated from the weight of the resin component excluding the inorganic filler. Specifically, in the present disclosure, the amorphous thermoplastic resin refers to the following resin. A sample is weighed in an amount of 2 to 10 mg, placed in an aluminum pan, and the temperature was increased from 23°C to 200°C or higher at a rate of 10°C/min using a DSC (DSC8231, manufactured by Rigaku Corporation) to obtain a DSC curve. Next, the heat of fusion is calculated from the area of the endothermic peak at the time of melting obtained from the DSC curve and the above-mentioned weighed value, and the resin having a heat of fusion of 15 J/g or less is selected.

From the viewpoint of sufficiently imparting the characteristics of the amorphous thermoplastic resin to the film-shaped bonding material, the content of the amorphous thermoplastic resin is preferably 51% by mass or more, more preferably 60% by mass or more, still more preferably 70% by mass or more, particularly preferably 80% by mass or more, and most preferably 90% by mass or more of the resin component in the film-shaped bonding material. In the present disclosure, the "resin component in the film-shaped bonding material" means a component other than the filler in the film-shaped bonding material.

The heat of fusion is 15 J/g or less, preferably 11 J/g or less, more preferably 7 J/g or less, still more preferably 4 J/g or less, and it is most preferable that the melting peak is equal to or lower than the detection limit.

The epoxy equivalent is 1,600 or more, preferably 2,000 or more, more preferably 5,000 or more, and still more preferably 9,000 or more, and it is most preferable that the epoxy equivalent is equal to or higher than the detection limit and the epoxy group is not substantially detected.

By using a film-shaped bonding material containing an amorphous thermoplastic resin having an epoxy equivalent of 1,600 or more and a heat of fusion of 15 J/g or less, a rapid decrease in viscosity as seen in a conventional hot-melt adhesive does not occur during heating, and a low viscosity (0.001 to 100 Pa·s) state is not reached even in a high temperature region of higher than 200°C. Therefore, the film-shaped bonding material does not flow out from a laminated body even in a molten state, and the thickness of the adhesive layer can be stably ensured, and a high adhesive force can be stably obtained.

The epoxy equivalent (the weight of the resin containing 1 mol of epoxy group) referred to herein is a value of the epoxy equivalent of the thermoplastic epoxy resin or phenoxy resin component contained in the film-shaped bonding material before bonding, and is a value (unit "g/eq.") measured by a method specified in JIS-K 7236:2001. Specifically, the epoxy equivalent is a value obtained by using a potentiometric titration device, using cyclohexanone as a solvent, adding a brominated tetraethylammonium acetic acid solution, using a 0.1 mol/L perchloric acid-acetic acid solution, and calculating a numerical value of a solvent diluted product (resin varnish) as a value in terms of a solid content from a nonvolatile component. In the case of a mixture of two or more resins, the epoxy equivalent can also be calculated from the content of each resin and the epoxy equivalent.

The melting point of the amorphous thermoplastic resin contained in the film-shaped bonding material is preferably 50°C to 400°C, more preferably 60°C to 350°C, and still more preferably 70°C to 300°C. When the melting point is in the range of 50°C to 400°C, the film-shaped bonding material is efficiently deformed and melted by heating and effectively wets and spreads on the adhesion surface, so that a high adhesive force is obtained.

In the description herein, the melting point of the amorphous thermoplastic resin means a temperature range of a process in which the amorphous thermoplastic resin is substantially softened from a solid state, becomes thermoplastic, and can be melted and adhered.

The conventional heat-curable adhesive has problems that it is difficult to disassemble the bonded body, it is difficult to separate and recycle dissimilar materials constituting the bonded body (i.e., poor in recycling property), and it is difficult to reattach the bonded body when the bonding portion is displaced in the production process of the bonded body or when the contents or the adherend has a defect and needs to be replaced (i.e., poor in repairing property), thus lacking convenience. However, the film-shaped bonding material can be softened and melted by heat and can be easily peeled off, so it has excellent recycling property. In addition, since the film-shaped bonding material is thermoplastic, it can be reversibly softened, melted, and cured repeatedly, and is also excellent in repairing property.

<<Thermoplastic Epoxy Resin>>

The thermoplastic epoxy resin is preferably a polymer of (a) a bifunctional epoxy resin monomer or oligomer and (b) a bifunctional compound having two identical or different functional groups selected from the group consisting of a phenolic hydroxy group, a carboxy group, a mercapto group, an isocyanate group, and a cyanate ester group. By using such a compound, the polymerization reaction for forming a linear polymer proceeds preferentially, and a thermoplastic epoxy resin having desired properties can be obtained.

The resin composition applied onto the support in the method for producing a film-shaped bonding material in the present disclosure may be a resin composition in which the thermoplastic epoxy resin obtained by performing the polymerization reaction in the absence of a solvent is dissolved in a solvent, or may be a resin composition containing the thermoplastic epoxy resin obtained by performing the polymerization reaction in a solvent together with the solvent.

The bifunctional epoxy resin monomer or oligomer (a) refers to an epoxy resin monomer or oligomer having two epoxy groups in the molecule.

Specific examples of the component (a) include bisphenol A type epoxy resins, bisphenol F type epoxy resins, bifunctional phenol novolac type epoxy resins, bisphenol AD type epoxy resins, biphenyl type epoxy resins, bifunctional naphthalene type epoxy resins, bifunctional alicyclic epoxy resins, bifunctional glycidyl ester type epoxy resins (e.g., diglycidyl phthalate, diglycidyl tetrahydrophthalate, dimer acid diglycidyl ester), bifunctional glycidylamine type epoxy resins (e.g., diglycidyl aniline, diglycidyl toluidine), bifunctional heterocyclic epoxy resins, bifunctional diarylsulfone type epoxy resins, hydroquinone type epoxy resins (e.g., hydroquinone diglycidyl ether, 2,5-di-tert-butylhydroquinone diglycidyl ether, resorcin diglycidyl ether), bifunctional alkylene glycidyl ether-based compounds (e.g., butanediol diglycidyl ether, butenediol diglycidyl ether, butynediol diglycidyl ether), bifunctional glycidyl group-containing hydantoin compounds (e.g., 1,3-diglycidyl-5,5-dialkylhydantoin, 1-glycidyl-3-(glycidoxyalkyl)-5,5-dialkylhydantoin), bifunctional glycidyl group-containing siloxanes (e.g., 1,3-bis(3-glycidoxypropyl)-1,1,3,3-tetramethyldisiloxane, $\alpha,\beta$-bis(3-glycidoxypropyl) polydimethylsiloxane), and modified products thereof. Among these, a bisphenol A type epoxy resin, a bisphenol F type epoxy resin, and a biphenyl type epoxy resin are preferable from the viewpoint of reactivity and workability.

Examples of the bifunctional compound having a phenolic hydroxy group of the component (b) include mononuclear aromatic dihydroxy compounds having one benzene ring, such as catechol, resorcin, and hydroquinone; bisphenols such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds into which an allyl group is introduced, such as diallyl resorcin, diallyl bisphenol A, and triallyl dihydroxybiphenyl; and dibutyl bisphenol A.

Specific examples of the carboxyl group-containing compound of the component (b) include adipic acid, succinic acid, malonic acid, cyclohexanedicarboxylic acid, phthalic acid, isophthalic acid, and terephthalic acid.

Examples of the mercapto group-containing bifunctional compound of the component (b) include ethylene glycol bisthioglycolate and ethylene glycol bisthiopropionate.

Specific examples of the bifunctional compound having an isocyanate group of the component (b) include diphenylmethane diisocyanate (MDI), isophorone diisocyanate (IPDI), hexamethylene diisocyanate (HMDI), and tolylene diisocyanate (TDI).

Specific examples of the cyanate ester group-containing bifunctional compound of the component (b) include 2,2-bis(4-cyanatophenyl)propane, 1,1-bis(4-cyanatophenyl)ethane, and bis(4-cyanatophenyl)methane.

Among the compounds of the component (b), a bifunctional compound having a phenolic hydroxy group is preferred from the viewpoint of obtaining a polymer having thermoplasticity, a bifunctional compound having two phenolic hydroxy groups and having a bisphenol structure or a biphenyl structure is preferred from the viewpoint of heat resistance and adhesiveness, and bisphenol A, bisphenol F or bisphenol S is preferred from the viewpoint of heat resistance and cost.

When the component (a) is a bisphenol A type epoxy resin, a bisphenol F type epoxy resin, a bisphenol S type epoxy resin, or a biphenyl type epoxy resin and the component (b) is bisphenol A, bisphenol F, or bisphenol S, the polymer obtained by polymerization of the component (a) and the component (b) has a structure which has a paraphenylene structure and an ether bond as a main skeleton, a main chain formed by connecting the paraphenylene structure and the ether bond with an alkylene group, and a hydroxy group generated by polyaddition and arranged in a side chain.

The linear structure composed of the paraphenylene skeleton can increase the mechanical strength of the polymer after polymerization, and the arranged hydroxy group in the side chain can improve the adhesion to the base materials. As a result, a high adhesive strength can be realized while maintaining the workability of the thermosetting resin. Further, in the case of a thermoplastic resin, recycling and repairing become possible by softening and melting the resin with heat, and recycling property and repairing property, which are problems in a thermosetting resin, can be improved.

<<Phenoxy Resin>>

The phenoxy resin is a polyhydroxy polyether synthesized from bisphenols and epichlorohydrin, and has thermoplasticity. For the production of the phenoxy resin, a method by a direct reaction of a dihydric phenol and epichlorohydrin, and a method by an addition polymerization reaction of a diglycidyl ether of a dihydric phenol and a dihydric phenol are known, and the phenoxy resin used in the present invention may be obtained by any production method. In the case of a direct reaction between a dihydric phenol and epichlorohydrin, examples of the dihydric phenol include phenols such as bisphenol A, bisphenol F, bisphenol S, biphenol, biphenylene diol, and fluorene diphenyl; and aliphatic glycols such as ethylene glycol, propylene glycol, and diethylene glycol. Among them, bisphenol A, bisphenol F, and bisphenol S are preferable from the viewpoints of cost, adhesiveness, viscosity, and heat resistance. One kind thereof may be used singly, or two or more kinds thereof may be used in combination.

The phenoxy resin has a chemical structure similar to that of the epoxy resin, and has a structure which has a para-phenylene structure and an ether bond as a main skeleton, a main chain formed by linking the para-phenylene structure and the ether bond, and a hydroxy group arranged in a side chain.

<<Physical Properties of Thermoplastic Epoxy Resin and Phenoxy Resin>>

The thermoplastic epoxy resin and phenoxy resin preferably have a weight-average molecular weight of 10,000 to 500,000, more preferably 18,000 to 300,000, and still more preferably 20,000 to 200,000, which is a value in terms of polystyrene as measured by gel permeation chromatography (GPC). The weight-average molecular weight is calculated from an elution peak position detected by GPC, and is a value of a molecular weight in terms of standard polystyrene. When the weight-average molecular weight is within this value range, the balance between thermoplasticity and heat resistance is good, a bonded body is efficiently obtained by melting, and the heat resistance thereof is also high. When the weight-average molecular weight is 10,000 or more, the heat resistance is excellent, and when the weight-average molecular weight is 500,000 or less, the viscosity at the time of melting is low, and the adhesiveness is high.

<<Solvent>>

The solvent used in the method for producing a film-shaped bonding material in the present disclosure is not particularly limited as long as the solvent dissolves the resin to constitute the resin composition. Examples thereof include ketone-based solvents such as methyl ethyl ketone, cyclohexanone, and methyl isobutyl ketone, ether-based solvents such as ethylene glycol monomethyl ether, ethylene glycol monoethyl ether, diethylene glycol monomethyl ether, diethylene glycol monoethyl ether, and diethylene glycol dimethyl ether, and amide-based solvents such as formamide, N-methylformamide, N,N-dimethylformamide, acetamide, N-methylacetamide, N,N-dimethylacetamide, N,N,N',N'-tetramethylurea, 2-pyrrolidone, N-methylpyrrolidone, and carbamic acid ester.

The concentration of the solvent contained in the resin composition applied to the support is preferably 10% to 95% by mass, more preferably 30% to 90% by mass, and particularly preferably 50% to 80% by mass.

The solvent contained in the resin composition may also serve as a solvent for polymerizing the epoxy resin.

<<Components other than Resin Component in Resin Composition>>

If necessary, the resin composition may contain a filler or an additive as a component other than the resin component as long as the object of the present invention is not impaired.

Examples of the filler include an inorganic filler and an organic filler (resin powder).

Examples of the inorganic filler include spherical fused silica, metal powder of metal such as iron, silica sand, talc, calcium carbonate, mica, acid clay, diatomaceous earth, kaolin, quartz, titanium oxide, silica, phenol resin microballoons, and glass balloons.

When the filler is contained, the content of the filler in 100% by volume of the total amount of the film-shaped bonding material is preferably 50% by volume or less, more preferably 30% by volume or less, further preferably 20% by volume or less, and most preferably 10% by volume or less.

The content (% by volume) of the filler is determined from the charged amount at 25°C, and specifically, is calculated by the following (Formula 1) based on the specific gravity of the components other than the filler and the true specific gravity of the filler with respect to% by mass of the filler.

$$\text{(Formula 1)}$$

$$X = (MF/DF) \div (MF/DF + (100 - MF)/DR) \times 100\%$$

In (Formula 1),

X: content of filler (% by volume),
MF: charged amount of filler (% by mass),
DR: specific gravity when resin components are cured, and
DF: true specific gravity of filler.

The content of the resin component in 100% by volume of the total amount of the film-shaped bonding material is preferably 10% by volume or more, more preferably 20% by volume or more, further preferably 30% by volume or more, still further preferably 50% by volume or more, and in one aspect, 80% by volume or more, in another aspect, 90% by volume or more, and in another aspect, 99% by volume or more.

Examples of the additive include an antifoaming agent, a coupling agent such as a silane coupling agent, and a pigment, and one or two or more of these may be contained.

The content of the additive in the film-shaped bonding material is preferably 10% by mass or less, more preferably 5% by mass or less, and further preferably 1% by mass or less.

The content of the resin component in the film-shaped bonding material is preferably 10% by mass or more, more preferably 20% by mass or more, further preferably 30% by mass or more, still further preferably 50% by mass or more, and in one aspect, 80% by mass or more, in another aspect, 90% by mass or more, and in another aspect, 99% by mass or more.

The method for producing the resin composition used in the production of the film-shaped bonding material of the present disclosure is not particularly limited, and the resin composition is obtained, for example, by heating and polymerizing a monomer or oligomer of a bifunctional epoxy compound. During the polymerization, a solvent may be added to reduce the viscosity and facilitate stirring. In the case of adding a solvent, it is necessary to remove the solvent, and a film may be obtained by performing drying or polymerization or both of them on a support subjected to a release treatment.

(Step of Applying Resin Composition on Support and Step of Removing Solvent to Obtain Film-Shaped Bonding Material)

The method for producing a film-shaped bonding material in the present disclosure includes a step of applying the resin composition onto a support, and a step of removing the solvent from the resin composition applied onto the support to obtain a film-shaped bonding material laminated on the support.

The surface of the support to which the resin composition is applied is preferably subjected to a release treatment.

The support subjected to the release treatment is preferably a belt-shaped release film.

As the release film, for example, a synthetic resin film such as a polyester-based film such as polyethylene terephthalate and a polyolefin-based film such as polyethylene and polypropylene can be used.

The method of the release treatment is not particularly limited, and examples thereof include a release treatment with a silicone resin, an alkyd resin, a long-chain alkyl group-containing resin, and the like.

The film-shaped bonding material obtained through the above steps preferably has a thickness of 10 $\mu$m to 3 mm. When the size is in such a range, it can be sandwiched between the base material A and the base material B and efficiently spread on the adhesion surface by heating and pressurization, and a high adhesive force can be obtained.

The film-shaped bonding material may have tackiness within a range that does not impair the adhesive force and the heat resistance thereof. In this case, the film-shaped bonding material is temporarily fixed to the base material in the laminated body preparation step.

The film-shaped bonding material may be a single layer or a laminated body including a plurality of layers, but is preferably a single layer from the viewpoint of ease of production and improvement of bonding force.

[Bonded Body]

A bonded body 1 shown in Fig. 1 is obtained by bonding and integrating a base material A (3) and a base material B (4) via a bonding layer 2 formed by melting and then solidifying the film-shaped bonding material of the present invention. In one embodiment, the bonded body 1 can be obtained by arranging the base material A, the film-shaped bonding material, and the base material B in this order to prepare a laminated body, and heating and pressurizing the laminated body to melt the film-shaped bonding material. In another embodiment, the bonded body 1 can also be obtained through a first bonding step of bonding the base material A and the film-shaped bonding material by melting and then solidifying the film-shaped bonding material in a state where the film-shaped bonding material is brought into surface contact with the base material A, and a second bonding step of bonding the base material A and the base material B by melting and then solidifying the film-shaped bonding material in a state where the film-shaped bonding material bonded to the base material A is brought into surface contact with the base material B.

The bonded body obtained by using the film-shaped bonding material of the present invention exhibits excellent bonding strength even in the case of a bonded body of dissimilar materials. Since the bonding strength is affected by a large number of factors such as the thickness of the bonding layer, the molecular weight and chemical structure of the polymer constituting the film-shaped bonding material, mechanical properties, and viscoelastic properties, in addition to the strength of the interfacial interaction acting between the bonding layer and the base material A and between the bonding layer and the base material B, the details of the mechanism by which the bonded body of the present invention exhibits excellent bonding strength are not clear, but it is presumed that the main factors are that the cohesive force in the amorphous thermoplastic resin constituting the bonding layer 2 is low, and a hydroxy group is present in the resin to form a chemical bond or an intermolecular force such as a hydrogen bond or a van der Waals force at the interface between the bonding layer and the base material A and the interface between the bonding layer and the base material B. However, in the bonded body, the state or characteristic of the interface of the bonded body is a very thin chemical structure of a nanometer level or less and is difficult to analyze, and it is impossible or impractical in the current technology to express the state or characteristic by specifying the state or characteristic so as to distinguish the state or characteristic from a state or characteristic that does not depend on the use of a film-shaped bonding material.

The bonded body of the present invention in which the bonding layer is made of a thermoplastic resin is excellent in recycling property and repairing property, and can be easily disassembled into the base material A and the base material B by heating the bonded body.

The material and shape of the base material A and the base material B are not particularly limited. The base material A and the base material B may be the same type of base material or different types of base materials. Examples of the material constituting each base material include glass, ceramic, a magnetic material, a non-magnetic material, fiber reinforced plastic (FRP), metal, wood, paper, and composite glass.

Examples of the glass include soda lime glass, lead glass, borosilicate glass, and quartz glass.

Examples of the ceramic include oxide-based ceramics such as alumina, zirconia, and barium titanate, hydroxide-based ceramics such as hydroxyapatite, carbide-based ceramics such as silicon carbide, and nitride-based ceramics such as silicon nitride.

Examples of the magnetic material include magnetic metal such as iron, and magnetic ceramic having a magnetic permeability larger than that of the following non-magnetic material.

Examples of the non-magnetic material include non-magnetic ferrite ceramics, and insulating glass ceramics containing alumina and glass as main components, in addition to aluminum and ceramics.

Examples of the fiber-reinforced plastic (FRP) include glass fiber reinforced plastic (GFRP), carbon fiber reinforced plastic (CFRP), boron fiber reinforced plastic (BFRP), and aramid fiber reinforced plastic (AFRP) whose strength is improved by combining various fibers with thermosetting resins such as urethane resins, epoxy resins, vinyl ester resins, unsaturated polyesters, polyamide resins, and phenol resins. Examples thereof also include molded object from glass fibers and carbon fibers SMC (sheet molding compounds).

Examples of the metal include iron, aluminum, copper, magnesium, and titanium. Among these, aluminum and copper are particularly suitably used from the viewpoint of lightness, ease of processing, and the like. In the present invention, the term "aluminum" is used to include aluminum and alloys thereof. Similarly, iron, copper, aluminum, magnesium, and titanium are also used to include these simple substances and alloys thereof (stainless steel, duralumin, and the like).

Examples of the wood include sliced veneer, wood veneer, wood plywood, particle board, and wood fiber board such as MDF (medium density fiber board).

Examples of the paper include kraft paper, high-quality paper, coated paper, and paper to which barrier properties are imparted (barrier-coated paper).

Examples of the composite glass include a composite glass in which two sheets of glass facing each other are provided with a space of at least 0.1 mm or more therebetween, and a window film containing a UV absorber is attached to the inner surface of at least one sheet of glass.

Examples

Next, specific examples of the present invention will be described, but the present invention is not particularly limited to these Examples. In the following examples, the base material A and the base material B are collectively referred to as bonding base materials.

<Bonding Base Materials>

The following bonding base materials were used.

<<PA6 (6-Nylon)>>

AMILAN CM3001G 30 manufactured by Toray Industries, Inc. was injection-molded to obtain a test piece having a width of 10 mm, a length of 45 mm, and a thickness of 3 mm. The test piece was used without surface treatment. In order to efficiently perform heating at the time of ultrasonic welding, a linear protrusion having an equilateral triangular cross section and a height of 0.5 mm was formed at a position of 2.5 mm from the end.

<<PBT (Polybutylene Terephthalate)>>

20-1001 manufactured by SABIC was injection-molded to obtain a test piece having a width of 18 m, a length of 45 mm, and a thickness of 1.5 mm. The test piece was used without surface treatment.

<<PC (Polycarbonate)>>

121R manufactured by SABIC was injection-molded to obtain a test piece having a width of 10 mm, a length of 45 mm, and a thickness of 3 mm. The test piece was used without surface treatment.

<<Iron>>

The surface of SPCC-SD was subjected to a blast treatment to obtain a test piece having a width of 10 mm, a length of 45 mm, and a thickness of 2.3 mm.

<<Aluminum>>

The surface of A6061-T6 was subjected to a blast treatment to obtain a test piece having a width of 10 mm, a length of 45 mm, and a thickness of 3 mm.

<Weight-Average Molecular Weight, Heat of Fusion, and Epoxy Equivalent of Thermoplastic Epoxy Resin and Phenoxy Resin>

The weight-average molecular weight, the heat of fusion, and the epoxy equivalent of the film were determined as follows.

(Weight-average molecular weight)

The thermoplastic epoxy resin and the phenoxy resin were dissolved in tetrahydrofuran, and measurement was performed under the following conditions using Prominence 501 (manufactured by Showa Science Co., Ltd., Detector: Shodex (registered trademark) RI-501 (manufactured by Resonac Corporation)).

Column: LF-804 (manufactured by Resonac Corporation) $\times$ 2
Column temperature: 40°C
Sample: 0.4% by mass tetrahydrofuran solution of resin
Flow rate: 1 mL/min
Eluent: tetrahydrofuran
Calibration method: standard polystyrene conversion

(Heat of fusion)

Two to ten mg of each of the thermoplastic epoxy resin and the phenoxy resin were weighed, placed in an aluminum pan, and the temperature was increased from 23°C to 200°C at a rate of 10°C/min using a DSC (DSC8231 manufactured by Rigaku Corporation), thereby obtaining a DSC curve. The heat of fusion was calculated from the area of the endothermic peak at the time of melting of the DSC curve and the above weighed value.

(Epoxy equivalent)

The epoxy equivalent was measured in accordance with JIS K-7236:2001 and converted into a value as a resin solid content. In the case of a simple mixture that does not involve a reaction, the epoxy equivalent was calculated from each epoxy equivalent and content.

<Example 1>

(Film P-1)

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight-average molecular weight: about 50,000) and 80 g of cyclohexanone were charged, the temperature was increased to 60°C while stirring, completion of dissolution was visually confirmed, and the mixture was cooled to 40°C, thereby obtaining a resin composition having a solid content of 20% by mass. The resin composition was applied to a polyethylene terephthalate film (thickness: 100 $\mu$m) which had been subjected to a release treatment, and then heated at 160°C for 2 hours to remove the solvent, thereby obtaining a film (P-1) having a solid content of 100% by mass and a thickness of 100 $\mu$m. The weight-average molecular weight was 50,000, and the epoxy equivalent was equal to or higher than the detection limit. No heat of fusion peak was detected in DSC.

(Bonded body)

The following three types of bonded bodies were produced.
In addition, for open time evaluation, a bonded body for open time evaluation was also produced in the same manner as in the following <<Metal-Metal>> except that the film was disposed on the aluminum base material (base material A), then left to stand for 3 days, and then the PC base material (base material B) was placed thereon.

<<Resin-Resin>>

The film P-1 cut into a size of 10 × 15 mm was disposed on the PBT base material as the base material A, and immediately thereafter, the PA6 base material as the base material B was disposed on the film P-1 so that the triangular protrusion was placed thereon. The base materials overlapped with each other at a width of 10 mm and a depth of 5 mm. The film P-1 was disposed so as to cover all the overlapped regions of the base materials. That is, an unbonded laminated body was prepared in a state in which the base material A and the base material B were not in direct contact with each other and the film was interposed therebetween. In the description herein, the term "immediately thereafter" means within about 30 minutes.
By applying ultrasonic waves using an ultrasonic welding machine (manufactured by Seidensha Electronics Co., Ltd., Oscillator JII930S, Press JIIP30S), the test pieces were bonded to each other by heating and pressurization. The amount of sinking was set to 0.6 mm, and the ultrasonic wave application time was set to 1 second or less. (The application was terminated at the time when the sinking was completed even if the time was shorter than 1 second). The subsequent retention time was 1 second. The pressurization force was 110 N (pressure: 2.2 MPa), and the oscillation frequency was 28.5 kHz.

<<Resin-Metal>>

The film P-1 cut into a size of 10 × 15 mm was disposed on the aluminum base material as the base material A, and immediately thereafter, the PC base material was disposed thereon as the base material B. The base materials overlapped with each other at a width of 10 mm and a depth of 5 mm. The film P-1 was disposed so as to cover all the overlapped regions of the base materials. That is, an unbonded laminated body was prepared in a state in which the base material A and the base material B were not in direct contact with each other and the film was interposed therebetween.
Using a high-frequency induction welding machine (manufactured by Seidensha Electronics Co., Ltd., Oscillator UH-2.5K, Press JIIP30S), the metal was caused to generate heat by high-frequency induction, and the test pieces were bonded to each other by heating and pressurization. The pressurization force was 110 N (pressure: 2.2 MPa), and the oscillation frequency was 900 kHz. The oscillation time was set to 6 seconds.

<<Metal-Metal>>

The film P-1 cut into a size of 10 × 15 mm was disposed on the aluminum base material as the base material A, and immediately thereafter, the iron base material was disposed thereon as the base material B. The base materials overlapped with each other at a width of 10 mm and a depth of 5 mm. The film P-1 was disposed so as to cover all the overlapped regions of the base materials. That is, an unbonded laminated body was prepared in a state in which the base material A and the base material B were not in direct contact with each other and the film was interposed therebetween.

Using a high-frequency induction welding machine (manufactured by Seidensha Electronics Co., Ltd., Oscillator UH-2.5K, Press JIIP30S), the metal was caused to generate heat by high-frequency induction, and the test pieces were bonded to each other by heating and pressurization. The pressurization force was 110 N (pressure: 2.2 MPa), and the oscillation frequency was 900 kHz. The oscillation time was set to 5 seconds.

<Example 2>

(Film P-2)

Powder of a crystalline epoxy resin YSLV-80XY (manufactured by NIPPON STEEL Chemical & Material Co., Ltd.) was sprinkled on the film P-1 at a mass ratio of 98:2 and pressed to obtain a film (P-2). The weight-average molecular weight was 36,000, the epoxy equivalent was 9600 g/eq, and the heat of fusion was 2 J/g.

(Bonded body)

Three types of bonded bodies and a bonded body for open time evaluation were produced in the same manner as in Example 1 except that P-2 was used as the film.

<Example 3>

(Film P-3)

Powder of a crystalline epoxy resin YSLV-80XY (manufactured by NIPPON STEEL Chemical & Material Co., Ltd.) was sprinkled on the film P-1 at a mass ratio of 94:6 and pressed to obtain a film (P-3). The weight-average molecular weight was 35,000, the epoxy equivalent was 2100 g/eq, and the heat of fusion was 4 J/g.

(Bonded body)

Three types of bonded bodies and a bonded body for open time evaluation were produced in the same manner as in Example 1 except that P-3 was used as the film.

<Example 4>

(Film P-4)

Powder of a crystalline epoxy resin YSLV-80XY (manufactured by NIPPON STEEL Chemical & Material Co., Ltd.) was sprinkled on the film P-1 at a mass ratio of 89:11 and pressed to obtain a film (P-4). The weight-average molecular weight was 33,000, the epoxy equivalent was 1745 g/eq, and the heat of fusion was 11 J/g.

(Bonded body)

Three types of bonded bodies and a bonded body for open time evaluation were produced in the same manner as in Example 1 except that P-4 was used as the film.

<Comparative Example 1>

(Film Q-1)

Two liquids of a thermosetting liquid epoxy adhesive E-250 (manufactured by KONISHI Co., Ltd., a two liquid type of a bisphenol-type epoxy resin and an amine curing agent) were mixed, applied to a release film, cured at 100°C for 1 hour, cooled, and peeled off from the release film to obtain a film (Q-1) having a thickness of 100 μm. No heat of fusion peak was detected in DSC. The epoxy equivalent and the weight-average molecular weight could not be measured due to insolubility in the solvent.

(Bonded body)

Three types of bonded bodies and a bonded body for open time evaluation were produced in the same manner as in Example 1 except that Q-1 was used as the film.

<Comparative Example 2>

(Film Q-2)

An amorphous polycarbonate film (Iupilon (registered trademark) FE2000, manufactured by Mitsubishi Engineering-Plastics Corporation, thickness: 100 μm) was used as a solid bonded body Q-2. No heat of fusion peak was detected in DSC.

(Bonded body)

Three types of bonded bodies and a bonded body for open time evaluation were produced in the same manner as in Example 1 except that Q-2 was used as the film.

<Comparative Example 3>

(Film Q-3)

A crystalline epoxy resin YSLV-80XY (manufactured by NIPPON STEEL Chemical & Material Co., Ltd.) was used as a film (Q-3). The epoxy equivalent was 192 g/eq. The weight-average molecular weight was 340. The heat of fusion was 70 J/g.

(Bonded body)

Three types of bonded bodies and a bonded body for open time evaluation were produced in the same manner as in Example 1 except that Q-3 was used as the film.

<Comparative Example 4>

(Bonded body)

Two liquids of a thermosetting liquid epoxy adhesive E-250 (manufactured by KONISHI Co., Ltd., a two-liquid type of a bisphenol-type epoxy resin and an amine curing agent) were mixed, applied to each of three types of the base material A and the base material B similar to those in Example 1, bonded to each other within one minute, and then left to stand in an oven at 100°C for one hour in a state of being fixed with a clip to cure the adhesive component, and then cooled to room temperature to produce three types of bonded bodies.
In addition, a bonded body for open time evaluation was also produced in the same manner as described above except that the thermosetting liquid epoxy adhesive E-250 was applied to the base material A and the base material B, and then the base material A and the base material B were allowed to stand for 3 days and then bonded to each other.

<Comparative Example 5>

A flask was charged with 1.0 equivalent (203 g) of jER (registered trademark) 1007 (manufactured by Mitsubishi Chemical Corporation, bisphenol A-type epoxy resin, weight-average molecular weight: about 10,000), 1.0 equivalent (12.5 g) of bisphenol S, 2.4 g of triphenylphosphine, and 1,000 g of methyl ethyl ketone, and the mixture was stirred at ordinary temperature to obtain a liquid resin composition having a solid content of about 20% by mass. The liquid resin composition was applied by bar coating on each of three types of base materials B similar to those in Example 1, dried at room temperature for 30 minutes, and then allowed to stand in an oven at 160°C for 2 hours to form a solid thermoplastic epoxy resin polymer coating layer having a thickness of 100 μm on the surface of the base material B. The weight-average molecular weight of the coating layer was about 40,000. The epoxy equivalent was equal to or higher than the detection limit. No heat of fusion peak was detected in DSC.

(Bonded body)

Three types of bonded bodies were produced in the same manner as in Example 1 except that the base material A was directly disposed on the base material B having the coating layer.

In addition, for open time evaluation, a bonded body for open time evaluation was also produced in the same manner as described above except that after the thermoplastic epoxy resin polymer coating layer was formed on the surface of the base material B, allowed to stand for 3 days, and then laminated with the base material A.

<Comparative Example 6>

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight-average molecular weight: about 50,000) and 80 g of cyclohexanone were charged, the temperature was raised to 60°C while stirring, completion of dissolution was visually confirmed, and the mixture was cooled to 40°C, thereby obtaining a liquid resin composition having a solid content of 20% by mass. A phenoxy resin coating layer having a thickness of 100 μm was formed on the surface of the base material B by bar coating the liquid resin composition on each of three types of base materials B similar to those in Example 1, and allowing the resultant to stand in an oven at 70°C for 30 minutes. The weight-average molecular weight of the coating layer was about 50,000. The epoxy equivalent was equal to or higher than the detection limit. No heat of fusion peak was detected in DSC.

(Bonded body)

Three types of bonded bodies were produced in the same manner as in Example 1 except that the base material A was directly disposed on the base material B having the phenoxy resin coating layer.

In addition, for open time evaluation, a bonded body for open time evaluation was also produced in the same manner as described above except that the phenoxy resin coating layer was formed on the surface of the base material B, then allowed to stand for 3 days, and then laminated with the base material A.

<Comparative Example 7>

(Bonded body)

Three types of bonded bodies and a bonded body for open time evaluation were produced in the same manner as in Example 1, except that a crystalline polyamide-based hot-melt adhesive film NT-120 (manufactured by Nihon Matai Co., Ltd., thickness: 100 μm) was used as the film. The heat of fusion was 60 J/g.

[Shear Adhesive Force]

The bonded bodies obtained in Examples 1 to 6 and Comparative Examples 1 to 7 were allowed to stand at a measurement temperature (23°C or 80°C) for 30 minutes or more, and then a tensile shear adhesive strength test was performed in 23°C and 80°C atmospheres using a tensile testing machine (universal testing machine Autograph "AG-X plus" (manufactured by Shimadzu Corporation); load cell 10 kN, tensile speed 10 mm/min) in accordance with ISO19095 to measure the bonding strength.

The measurement results are shown in Table 1.

[Bonding Process Time]

The bonding process time was measured as follows.

The bonding process time was measured from a start point to an end point, with the contact time between at least one of the base materials constituting the bonded body and the bonding agent as the start point and the completion time of the production of the bonded body as the end point. With respect to the heating and bonding time, the heating and bonding times of the two types of bonded bodies were averaged. The measurement results are shown in Table 1-1 and Table 1-2.

[Recycling Property]

The recycling property was determined by placing the bonded body in an oven at 200°C, heating the bonded body for 10 minutes, and then determining whether the bonded body could be easily detached with a force of 1 N or less. When the bonded body could be detached, it was evaluated as good (A), and when the bonded body could not be detached, it was evaluated as poor (B).

[Repairing Property]

After the tensile strength test at 23°C, the base material B of each of the test pieces of iron and iron in which the adhesion surface was broken (the layer of the bonded solid remained on the surface of the base material A or B, or both) was heated to 350°C, and the base material A was inserted to prepare a bonded body in the same manner as in Example 1, thereby obtaining a repaired bonded body. The tensile adhesive force of the repaired bonded body at 23°C was measured in the same manner as in the above-described test method, and a case where the tensile adhesive force was 80% or more of the shear adhesive force of the first time was evaluated as good (A), and a case where the tensile adhesive force was less than 80% of the shear adhesive force of the first time was evaluated as poor (B). The evaluation results are shown in Table 1-1 and Table 1-2.

[Open Time Evaluation]

Using the bonded body for open time evaluation, the tensile shear adhesive strength test was performed at 23°C. When the shear adhesive force was 80% or more as compared with the test pieces prepared by the methods of the above-described Examples and Comparative Examples, it was evaluated as good (A), and when it was less than 80%, it was evaluated as poor (B). When the open time evaluation is good (A), it means that the open time is long and the convenience is excellent. The evaluation results are shown in Table 1-1 and Table 1-2.

[Table 1-1]

Table 1-1

| | | Example 1 | Example 2 | Example 3 | Example 4 |
|---|---|---|---|---|---|
| Properties of bonding agent | Form of bonding agent | Film | Film | Film | Film |
| | Resin main component | Phenoxy resin | Thermoplastic epoxy resin | Thermoplastic epoxy resin | Thermoplastic epoxy resin |
| | Weight-average molecular weight | 50000 | 36000 | 35000 | 33000 |
| | Heat of fusion [J/g] | No melting peak | 2 | 4 | 11 |
| | Epoxy equivalent [g/eq] | Equal to or higher than detection limit | 9600 | 2100 | 1745 |

(continued)

|  |  |  | Example 1 | Example 2 | Example 3 | Example 4 |
|---|---|---|---|---|---|---|
| Adhesive force | 23°C Shear adhesive force [MPa] | Resin/Resin | 14 | 15 | 12 | 11 |
|  |  | Resin/Metal | 19 | 23 | 22 | 23 |
|  |  | Metal/Metal | 21 | 21 | 19 | 21 |
|  | 80°C Shear adhesive force [MPa] | Resin/Resin | 8 | 7 | 7 | 5 |
|  |  | Resin/Metal | 18 | 17 | 16 | 14 |
|  |  | Metal/Metal | 12 | 14 | 13 | 13 |
| Convenience | Bonding process time | | 3.5 sec | 3.5 sec | 3.5 sec | 3.5 sec |
|  | Recycling property | | A | A | A | A |
|  | Repairing property | | A | A | A | A |
|  | Long open time property | | A | A | A | A |

[Table 1-2]

Table 1-2

|  |  |  | Comparative Example 1 | Comparative Example 2 | Comparative Example 3 | Comparative Example 4 |
|---|---|---|---|---|---|---|
| Properties of bonding agent | | Form of bonding agent | Film | Film | Film | Liquid |
|  |  | Resin main component | Thermosetting epoxy resin | Polycarbonate | Epoxy resin | Thermosetting epoxy resin |
|  |  | Weight-average molecular weight | - | - | 340 | - |
|  |  | Heat of fusion [J/g] | No melting peak | No melting peak | 70 | No melting peak |
|  |  | Epoxy equivalent [g/eq] | - | - | 192 | - |
| Adhesive force | 23°C Shear adhesive force [MPa] | Resin/Resin | 9 | 11 | 5 | 1 |
|  |  | Resin/Metal | 1 | 3 | 5 | 3 |
|  |  | Metal/Metal | 0 | 1 | 2 | 3 |
|  | 80°C Shear adhesive force [MPa] | Resin/Resin | 6 | 7 | 5 | 4 |
|  |  | Resin/Metal | 1 | 3 | 5 | 1 |
|  |  | Metal/Metal | 0 | 1 | 2 | 3 |

(continued)

| | | Comparative Example 1 | Comparative Example 2 | Comparative Example 3 | Comparative Example 4 |
|---|---|---|---|---|---|
| Convenience | Bonding process time | 3.5 sec | 3.5 sec | 3.5 sec | 70 min |
| | Recycling property | B | A | A | B |
| | Repairing property | B | A | A | B |
| | Long open time property | B | A | A | B |

Table 1-2 (continued)

| | | | Comparative Example 5 | Comparative Example 6 | Comparative Example 7 |
|---|---|---|---|---|---|
| Properties of bonding agent | | Form of bonding agent | Coating layer | Coating layer | Film |
| | | Resin main component | Thermoplastic epoxy resin | Phenoxy resin | Polyamide |
| | | Weight-average molecular weight | 40000 | 50000 | - |
| | | Heat of fusion [J/g] | No melting peak | No melting peak | 60 |
| | | Epoxy equivalent [g/eq] | Equal to or higher than detection limit | Equal to or higher than detection limit | - |
| Adhesive force | 23°C Shear adhesive force [MPa] | Resin/Resin | 15 | 17 | 11 |
| | | Resin/Metal | 43 | 21 | 1 |
| | | Metal/Metal | 4 | 5 | 6 |
| | 80°C Shear adhesive force [MPa] | Resin/Resin | 9 | 9 | 5 |
| | | Resin/Metal | 21 | 20 | 5 |
| | | Metal/Metal | 4 | 5 | 6 |
| Convenience | | Bonding process time | 150 min | 32 min | 3.5 sec |
| | | Recycling property | A | A | A |
| | | Repairing property | A | A | A |
| | | Long open time property | A | A | A |

Industrial Applicability

The film-shaped bonding material obtained by the production method of the present invention is used for production of, for example, automobile components, such as a door side panel, an engine hood roof, a tail gate, a steering hanger, an A-pillar, a B pillar, a C pillar, a D pillar, a crush box, a power control unit (PCU) housing, an electric compressor component (such as an inner wall, an intake port, an exhaust control valve (ECV) insertion part, and a mount boss), a lithium ion battery (LIB) spacer, a battery case, and an LED headlamp, and structural members of a smartphone, a laptop computer, a tablet personal computer, a smart watch, a large size liquid crystal display television set (LCD-TV), and an outdoor LED illumination, but are not particularly limited to these exemplified applications.

Reference Signs List

1: Bonded body

2: Adhesive layer
3: Base material A
4: Base material B

**Claims**

1. A method for producing a film-shaped bonding material, comprising a step of applying a resin composition containing an amorphous thermoplastic resin and a solvent onto a support, and a step of removing the solvent from the resin composition after the application to obtain a film-shaped bonding material laminated on the support,
   wherein the amorphous thermoplastic resin is at least one of a thermoplastic epoxy resin and a phenoxy resin, has an epoxy equivalent of 1,600 g/eq. or more or does not contain an epoxy group, and has a heat of fusion of 15 J/g or less.

2. The method for producing a film-shaped bonding material according to claim 1, further comprising a step of peeling off the film-shaped bonding material from the support on which the film-shaped bonding material is laminated.

3. The method for producing a film-shaped bonding material according to claim 1, wherein the support is a belt-shaped release film.

4. The method for producing a film-shaped bonding material according to claim 1, wherein the film-shaped bonding material has a thickness of 10 $\mu$m to 3 mm.

5. A bonded body obtained by bonding a base material A and a base material B via a film-shaped bonding material produced by the method for producing a film-shaped bonding material according to any one of claims 1 to 4.

[Fig. 1]

## INTERNATIONAL SEARCH REPORT

| International application No. |
|---|
| **PCT/JP2023/045902** |

| **A.** | **CLASSIFICATION OF SUBJECT MATTER** |
|---|---|

*C09J 7/35*(2018.01)i; *C09J 163/00*(2006.01)i; *C09J 171/10*(2006.01)i
FI: C09J7/35; C09J163/00; C09J171/10

According to International Patent Classification (IPC) or to both national classification and IPC

| **B.** | **FIELDS SEARCHED** |
|---|---|

Minimum documentation searched (classification system followed by classification symbols)

C09J1/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2017-52907 A (HITACHI CHEMICAL COMPANY, LTD.) 16 March 2017 (2017-03-16) paragraphs [0008], [0044]-[0049] | 1-5 |
| Y | | 1-5 |
| X | WO 2022/014503 A1 (NIPPON STEEL CHEMICAL & MATERIAL CO., LTD.) 20 January 2022 (2022-01-20) paragraphs [0008], [0019], [0029], [0034]-[0035], [0050], [0065] | 1-5 |
| Y | | 1-5 |
| Y | WO 2018/124215 A1 (NIPPON STEEL & SUMIKIN CHEMICAL CO., LTD.) 05 July 2018 (2018-07-05) paragraphs [0121], [0131], [0146] | 1-5 |
| Y | JP 56-89520 A (UNITIKA LTD.) 20 July 1981 (1981-07-20) claims, p. 1, lower right column, line 19 to p. 2, upper left column, line 6, p. 2, upper left column, lines 17-20 | 1-5 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2023/045902**

| C. | DOCUMENTS CONSIDERED TO BE RELEVANT | |
|---|---|---|
| Category* | Citation of document, with indication, where appropriate, of the relevant passages | Relevant to claim No. |
| A | JP 2011-126942 A (TOYOTA JIDOSHA KABUSHIKI KAISHA) 30 June 2011 (2011-06-30) entire document | 1-5 |
| A | WO 2022/172863 A1 (SHOWA DENKO K.K.) 18 August 2022 (2022-08-18) entire text | 1-5 |
| A | WO 2022/209116 A1 (NIPPON STEEL CHEMICAL & MATERIAL CO., LTD.) 06 October 2022 (2022-10-06) entire text | 1-5 |

Form PCT/ISA/210 (second sheet) (July 2022)

| | INTERNATIONAL SEARCH REPORT<br>Information on patent family members | | International application No.<br>**PCT/JP2023/045902** | |

| Patent document<br>cited in search report | Publication date<br>(day/month/year) | Patent family member(s) | Publication date<br>(day/month/year) |
|---|---|---|---|
| JP 2017-52907 A | 16 March 2017 | (Family: none) | |
| WO 2022/014503 A1 | 20 January 2022 | US 2023/0279278 A1<br>paragraphs [0014], [0032],<br>[0049], [0058]-[0060], [0085],<br>[0098]<br>EP 4180494 A1<br>CN 115836118 A<br>KR 10-2023-0038196 A | |
| WO 2018/124215 A1 | 05 July 2018 | US 2021/0129488 A1<br>paragraphs [0164], [0179],<br>[0206]<br>US 2021/0107269 A1<br>WO 2018/182038 A1<br>EP 3564029 A1<br>EP 3603970 A1<br>CN 110121413 A<br>KR 10-2019-0095318 A<br>TW 201831321 A<br>TW 201903013 A<br>CN 110461605 A<br>KR 10-2019-0134621 A | |
| JP 56-89520 A | 20 July 1981 | (Family: none) | |
| JP 2011-126942 A | 30 June 2011 | (Family: none) | |
| WO 2022/172863 A1 | 18 August 2022 | TW 202235564 A | |
| WO 2022/209116 A1 | 06 October 2022 | (Family: none) | |

Form PCT/ISA/210 (patent family annex) (July 2022)

**EP 4 644 503 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019157018 A
- JP 10017685 A
- JP 10168417 A